Europäisches Patentamt

European Patent Office

Office européen des brevets

(11) Veröffentlichungsnummer: **0 214 412 B1**

(12) **EUROPÄISCHE PATENTSCHRIFT**

(45) Veröffentlichungstag der Patentschrift: 27.03.91

(51) Int. Cl.⁵: **C04B 24/22**, C08G 16/02

(21) Anmeldenummer: 86109840.8

(22) Anmeldetag: 17.07.86

(54) Verwendung von Salzen wasserlöslicher Naphthalinsulfonsäure-Formaldehydkondensate als Zusatzmittel für anorganische Bindemittel und Baustoff.

(30) Priorität: 23.08.85 DE 3530258

(43) Veröffentlichungstag der Anmeldung:
18.03.87 Patentblatt 87/12

(45) Bekanntmachung des Hinweises auf die
Patenterteilung:
27.03.91 Patentblatt 91/13

(84) Benannte Vertragsstaaten:
AT BE CH DE FR GB IT LI LU NL SE

(56) Entgegenhaltungen:
EP-A- 0 073 606
US-A- 3 277 162

PATENTS ABSTRACTS OF JAPAN, Band 7,
Nr. 147 (C-173)(1292), 28. Juni 1983; & JP-
A-58 61 115 (SANYO KASEI KOGYO K.K.) 12.
April 1983

CHEMICAL ABSTRACTS, Band 99, Nr. 18,
1983, Seite 311, Nr. 145082g, Columbus,
Ohio, US; & JP-A-58 96 618 (NIPPON SODA
CO., LTD.) 08.06.1983 (Kat. D)

(73) Patentinhaber: Chemie Linz Gesellschaft
m.b.H.
St.Peter-Strasse 25
A-4021 Linz(AT)BE CH DE FR GB IT LI LU NL
SE AT

(72) Erfinder: Pieh, Stefan, Dr.
St.Peter-Str.25
A-4021 Linz(AT)
Erfinder: Werenka, Christian
Mitterbauerstrasse 14
A-4052 Ansfelden(AT)

(74) Vertreter: Kunz, Ekkehard, Dr.
Chemie Holding AG Patentwesen St. Peter-
Strasse 25
A-4021 Linz(AT)

**Beschreibung**

Die vorliegende Erfindung betrifft die Verwendung von Verflüssigern auf Basis von Naphthalinsulfonsäure-Formaldehydkondensaten zur Verbesserung der Eigenschaften, insbesondere der Fließfähigkeit von anorganischen Bindemitteln wie z. B. Zement, Anhydrit oder Gips.

Es ist bereits aus der US-PS 2 141 569 bekannt, daß die Fließfähigkeit von Baustoffen auf Basis von Zement durch Mittel, die auf den Zement dispergierend wirken, erhöht werden kann. Verzichtet man hingegen auf die durch das Zusatzmittel mögliche verbesserte Fließfähigkeit, so erreicht man andererseits durch geringeren Wasserzusatz zur Zementmischung bei gleichbleibender Fließfähigkeit eine Verbesserung der Festigkeiten der mit diesen Zusatzmitteln hergestellten Baumaterialien gegenüber solchen ohne verflüssigende Zusätze. Gemäß dieser Patentschrift werden derartige Betonverflüssiger durch Kondensation von aromatischen Sulfosäuren, wie beispielsweise Naphthalinsulfonsäure, mit Formaldehyd bei 95 - 100° C unter Normaldruck erhalten, wobei ein molares Verhältnis von Formaldehyd zu Naphthalinsulfonsäure von 0,5 - 0,82 eingehalten wird. In der DE-AS 1 238 831 und in der DE-PS 2 007 603 werden Naphthalinsulfonsäure-Formaldehydkondensate als Betonverflüssiger mit einem molaren Formaldehyd-Naphthalin-Verhältnis von 1: 1 beschrieben, die durch einen mindestens 70 %igen Gehalt an Kondensaten mit mindestens 5 Naphthalinkernen charakterisiert sind, wobei in der DE-PS 2 007 603 außerdem ein Glukonat zugesetzt wird. In der Japan Kokai 1983-96618 wird ebenfalls ein Betonverflüssiger auf Naphthalin-Formaldehydbasis beschrieben, der durch Kondensation bei 100 - 140° C in Stickstoffatmosphäre bei Drucken bis zu 30 bar erhalten wird. Das molare Verhältnis von Formaldehyd zu Naphthalin wird zwar formal mit 0,8 -1,2 beansprucht, in den konkreten Beispielen wird jedoch ein Verhältnis von 1,0 angewandt. Ferner sollen die guten Eigenschaften auf das Vorhandensein von Inertgas im Druckreaktor zurückzuführen sein. In der Japan Kokai 1983-61115 wird ein molares Formaldehyd-Naphtalin-Verhältnis von 0,7 - 1,1 bevorzugt von 0,9 - 1,05, beschrieben und darauf hignewiesen, daß ein molares Verhältnis von über 1,1 eine zu heftige Reaktion und Produkte mit schlechten Eigenschaften ergibt.

Naphtalinsulfonsäure-Formaldehyd-Kondensate mit einem höheren molaren Formaldehyd-Naphtalin-Verhätnis von bis zu 3, die dem Zement jedoch nicht zur Erhöhung der Fließfähigkeit sondern im Gegenteil zu Verminderung der Wasserverlustes zugesetzt werden, sind in der US-PS 3 277 162 beschrieben. Diese sogenannten "water loss additives" werden Zementen zugesetzt, die zur Auskleidung von Bohrlöchern, beispielsweise bei der Erdölförderung, Anwendung finden. Die Wirkung der "water loss additives" beruht darauf, daß sie den Wasserverlust aus der Zementmischung in das umgebende poröse Gestein verhindern sollen, solange der Zement noch nicht abgebunden ist.

Der Stand der Technik vermittelt also einhellig die Lehre, daß Naphtalinsulfonsäureharze, die als Betonverflüssiger eingesetzt werden, ein Verhältnis von Formaldehyd : Naphtalinsulfonsäure von maximal 1 : 1 besitzen sollen, höhere Formaldehydwerte im Verhältnis zur Naphtalinsulfonsäure aber einen nachteiligen Einfluß auf die verflüssigende Wirkung besitzen. Diese bekannten Betonverflüssiger sind überdies für eine optimale Anwendbarkeit nicht ausreichend wirksam, da sie gleichzeitig den Gehalt an Luftporen im Frischbeton stark erhöhen und dadurch eine Festigkeitseinbuße des fertigen Betons bewirken.

Es wurde nun überraschenderweise gefunden, daß Naphtalinsulfonsäure-Formaldehydkondensate mit einem höheren Formaldhyd-Naphtalinsulfonsäure-verhältnis als 1 : 1 gegenüber Harzen mit dem bisher üblichen niedrigeren Formaldehydgehalt eine wesentlich verbessete Fließfähigkeit bei gleichzeitig deutlich verminderter Luftporeneinführung bewirken, obwohl von solchen Harzen eine verminderte Wirkung zu erwarten war.

Dies eröffnet die Möglichkeit, Verflüssiger für anorganische Bindemittel auf Basis von Naphtalinsulfonsäureharzen zu schaffen, die im Gegensatz zu den bekannten Harzen eine optimale Anwendung sowohl mit als auch ohne Ausnutzung des wassereinsparenden Effektes gestatten.

Gegenstand der Erfindung ist demnach die Verwendung von Salzen von wasserlöslichen Naphtalinsulfonsäure-Formaldehydkondensaten, die ein molares Verhältnis von Formaldehyd zu Naphtanlinsulfonsäure von 1,2 : 1 bis 3 : 1 aufweisen und die bis zu einem kondensationsgrad kondensiert sind, der einer Grenzviskosität von 0,01 bis 0,15 dl/g entspricht, als Zusatzmittel für anorganische Bindemittel zur Erhöhung der Fließfähigkeit und gegebenenfalls der Festigkeit der daraus hergestellten Bauteile. Die Grenzviskosität bzw. der Staudinger-Index ist im Kunststoff-Handbuch, Band 1, Seite 736, Herausgeber: Vieweg und Braun, Carl Hanser Verlag 1975, definiert und wird zu Charakterisierung der Molmasse der Polykondensats herangezogen. Die Bestimmung erfolgte gemäß DIN 51562 im Ubbelohde-Kapillarviskosimeter in 1 n Natriumnitratlösung bei 30° C.

Der wesentliche Vorteil der Erfindung liegt vor allem in der erhöhten Fließfähigkeit der anorganischen Bindemittel, ohne daß zusätzlich Luftporen eingeführt und damit die Festigkeit reduziert wird. Dadurch wird einerseits der problemlose Transport von Bindemittelgemischen insbesondere durch Rohrleitungen gewährleistet, andererseits können auch schwer zugängliche und enge Stellen vollkommen ausgefüllt und größere ebene Flächen selbstnivellierend vergossen werden. Ein weiterer Vorteil der Erfindung besteht darin, daß bei Verwendung des erfindungsgemäßen Zusatzmittels die für die Verarbeitung notwendige Fließfähigkeit der Mischung bereits mit geringerem Wasserzusatz erreicht wird, wodurch der ausgehärtete Baustoff eine höhere Festigkeit besitzt. Ist für den speziellen Einsatz die erhöhte Festigkeit jedoch nicht erforderlich, so kann bei Verwendung des erfindungsgemäßen Zusatzmittels durch Einsparung von Bindemittel und erhöhtem Anteil an Zuschlagstoffen ein wirtschaftlich günstigerer Baustoff bei gleicher Festigkeit erhalten werden. Ensprechend den gegebenen Anforderungen wird es demnach möglich, je nach geforderter Flierßfähigkeit und Festigkeit ein Bindemittelgemisch von optimaler Wirschalftlichkeit zu erhalten.

Ein weiterer wichtiger Vorteil der erfindungsgemäßen Naphtalinsulfonsäure-Formaldehydharze ergibt sich auch daraus, daß die Frühfestigkeiten von Bindemitteln, denen derartige Harze zugesetzt werden, wesentlich höher liegen als jene vergleichbarer Bindemittel mit herkömmlichen Verflüssigern. Als anorganische Bindemittel sind alle in der Bauindustrie verwendeten Stoffe wie beispielsweise Zemente, Putz- und Mauerbinder, hydraulische kalke, Luftkalke, Baugipse, Anhydritbinder, Magnesitbinder, Mischbinder, (Mischung von hydraulischem Bindemittel mit puzzolanischen Stoffen, wie z.B. Flugasche oder mikroporöse Silica) zu verstehen, die mit oder ohne Zuschlagstoffen, wie z.B. Sand unterschiedlicher Körnung, sowie mit oder ohne weiteren Zusatzmitteln mit Wasser angesetzt werden und nach ihrer Aushärtung einen stabilen Bauteil bzw. eine stabile Verbindung von vorgefertigten Bauteilen ergeben.

In der praktischen Anwendung der Erfindung werden naphtalinsulfonsäure-Formaldehydharze bevorzugt mit einem molaren Formaldehyd-Naphtalinsulfonsäureverhältnis von 1,3 : 1 bis 3,0 : 1 eingesetzt, da hier optimale Ergebnisse hinsichtlich Verflüssigung und Festigkeit erzielbar sind.

Bevorzugt werden solche Naphtalinsulfonsäure-Formaldehydharze verwendet, die bis zu einem Kondensationsgrad kondensiert werden, der einer Grezviskosität von 0,02 bis 0,10 dl/g entspricht.

Die erfindungsgemäßen Naphtalinsulfonsäure-Formaldehydharze werden dem Bindemittelgemisch bevorzugt in einer Menge von 0,01 bis 5 Gew.% des festen Harzes, bezogen auf den Bindemittelgehalt zugesetzt. Ein Zusatz von 0,2 bis 1,5 Gew.% ist dabei besonders bevorzugt, da in diesem Bereich eine ausgezeichnete verflüssigende Wirkung erreicht wird, ohne daß allzu hohe Mengen des Harzes angewendet werden müssen. Das Naphtalin-Formaldehydharz kann dem Bindemittelgemisch sowohl in fester Form als auch in Lösung zugesetzt werden.

Vorteilhafterweise werden solche Naphtalinsulfonsäure-Formaldehydharze als Verflüssiger für anorganische Bindemittel verwendet, die dadurch hergestellt werden, daß in einer ersten Reaktionsstufe Naphtalin mit konzentrierter Schwefelsäure sulfoniert wird. Das dabei entstehende Wasser wird gleichzeitig durch azeotrope Destillation mit Benzin aus dem Sulfonierungsgemisch entfernt. Dadurch ist es möglich, mit annähernd molaren Schwefelsäuremengen das Auslangen zu finden. Ein molares Verhältnis Schwefelsäure zu Naphtalin von 0,9 bis 1,1 wird besonders bevorzugt.

Anschließend wird die entstandene Naphtalinsulfonsäure mit überschüssigem Formaldehyd kondensiert, wobei sowohl bei Atmosphärendruck als auch bei Überdruck, bevorzugt bei Drucken von 2,5 bis 11 bar, gearbeitet werden kann. Die Reaktionstemperatur liegt bevorzugt bei 110 bis 160°C. Die Errichtung einer Inertgasatmosphäre in der Druckzone ist nicht erforderlich. Nach der Kondensation wird auf einen pH-Wert zwischen 7,5 und 11 gestellt, wobei beispielsweise die Alkali-, Erdalkali- oder Ammoniumsalze gebildet werden. Die erhaltene Harzlösung wird entweder als solche eingesetzt oder gegebenenfalls im Sprühtrockner zur Trockene eingedampft, wobei das Harz als trockenes Pulver mit einem Wassergehalt von maximal 10 % anfällt.

Die vorliegende Erfindung wird an Hand der folgenden Beispiele näher erläutert:

Beispiel 1:

Herstellung des Verflüssigers:

300 g geschmolzenes 98 %iges Naphthalin (2,29 Mol) wurden in einem Kessel mit Rührwerk und einer Vorrichtung zur azeotropen Destillation von Reaktionswasser vorgelegt. Bei 120°C wurden 237 g $H_2SO_4$ 96 %ig unter Rühren innerhalb von 30 Minuten eingetragen. Nach Erreichen einer Sulfonierungstemperatur von 160°C wurde das gebildete Reaktionswasser mit Benzin azeotrop abdestilliert. Nachdem das gesamte Reaktionswasser aus dem Sulfonierungsgemisch entfernt war, wurde das Schleppmittel abdestilliert und das Reaktionsgemisch auf 120°C abgekühlt. Nach dem Eintragen von 292 g $H_2O$ wurde der Kessel mit der abgekühlten Sulfonsäure dicht verschlossen und anschließend während einer Stunde bei 120°C und einem

3

Druck von 1 - 3 bar 233,5 g Formalin 36 %ig eingetragen. Die Gesamtmenge Formaldehyd zu Naphthalin entsprach einem molaren Verhältnis von 1,22: 1. Anschließend wurde auf 140°C erwärmt, wobei sich ein Druck von 4,5 bar einstellte und bis zu einem Kondensationsgrad gerührt, der einer Grenzviskosität von 0,04 dl/g in 1n $NaNO_3$ bei 30°C entsprach. Daraufhin wurde entspannt, mit 360 g Wasser verdünnt und auf 80°C abgekühlt. Das saure Harz wurde mit ca. 200 g NaOH 50 %ig auf pH 8,0 gestellt und bei Raumtemperatur abgefüllt. Die Konzentration der Lösung an Naphthalin-Formaldehydharz betrug 40 %.

Harze eines anderen Formaldehyd-Naphthalinsulfonsäureverhältnisses können auf analoge Weise hergestellt werden. Die Mengenverhältnisse sind in nachfolgender Tabelle angegeben.

## Tabelle 1: Herstellung des Verflüssigers

| Beispiel | Formaldehyd/ Naphthalin (Mol/Mol) | Formalin 36 % (g) | Wasser (g) vor der Kondensation | nach der Kondensation |
|---|---|---|---|---|
| 1 | 1,22 | 233,5 | 292 | 360 |
| 2 | 1,30 | 248,8 | 280 | 364 |
| 3 | 1,50 | 287 | 273 | 380 |
| 4 | 2,00 | 383 | 239 | 405 |
| 5 | 2,50 | 477,5 | 205 | 411 |
| 6 | 3,00 | 574 | 170 | 450 |
| 7-16 | 1,50 | 287 | 273 | 380 |
| 17 | 1,22 | 233,5 | 292 | 364 |
| 18-20 | 1,50 | 287 | 273 | 380 |

Herstellung der Betonmischung:

In einem 65 1 Eirich-Zwangsmischer wurden
20,23 kg Rundkorn 0 - 4 mm
7,95 kg Rundkorn 4 - 8 mm
6,18 kg Rundkorn 8 - 16 mm
9,71 kg Rundkorn 16 - 32 mm
7,04 kg Zement PZ 275 H (Perlmooser Zementwerke, Werk Kirchbichl)
in getrocknetem Zustand 30 Sekunden vorgemischt, dann 2,60 kg Wasser zugesetzt und nach weiteren 30 Sekunden Mischdauer weitere 1,20 kg Wasser zugesetzt und noch 1 Minute gemischt. Anschließend wurden 49,3 g des Verflüssigers (als 40% oige Lösung), entsprechend einem Gehalt von 0,28 Gew.%, berechnet als Festsubstanz auf den Zementgehalt, zugesetzt und eine weitere Minute gerührt. Das Wasser-Zementverhältnis betrug 0,545, der Zementgehalt 300 kg/m$^3$ Frischbeton.

Nullprobe:

Zum Vergleich der verbesserten Eigenschaften der obigen Mischung wurde analog dazu eine Betonmischung angesetzt, jedoch ohne Zugabe des Verflüssigers.

An der erhaltenen Betonmischungen wurden entsprechend DIN 1048, Blatt 1 die folgenden Eigenschaften gemessen:

a) Ausbreitmaß in cm als Maß für die Fließfähigkeit, gemessen 1 Minute nach Beendigung des Mischvorganges,

b) Druckfestigkeit nach 18 Stunden und nach 28 Tagen, (Probewürfel mit 15 cm Kantenlänge),

4

c) Luftporengehalt nach dem Druckausgleichverfahren
Die Meßdaten sind gemeinsam mit jenen der Beispiele 2 - 6 in Tabelle 2 zusammengefaßt.

Beispiele 2 - 6:

Der erfindungsgemäße Verflüssiger wurde jeweils analog zu Beispiel 1 hergestellt, wobei jedoch, wie in Tabelle 1 angegeben, unterschiedliche Mengen Formalin eingesetzt wurden, sodaß sich die in Tabelle 1 angeführten verschiedenen molaren Verhältnisse von Formaldehyd zu Naphthalin im fertigen Harz ergaben. Weitere Unterschiede zu Beispiel 1 sind - ebenfalls in Tabelle 1 zusammengefaßt - die Menge des zugesetzten Wassers sowohl vor als auch nach der Kondensation. Der Harzgehalt der erhaltenen wäßrigen Lösungen lag bei 40 Gew.%
Die Herstellung und Prüfung der Betonmischungen erfolgte ebenfalls analog zu Beispiel 1, wobei in Beispiel 5 das Harz, nach Sprühtrocknung, in fester Form zugesetzt werde.
Die Meßdten sind in Tabelle 2 zusammengefaßt.

### Tabelle 2: Eigenschaften des Betons
### 300 kg PZ 275/m$^3$, Wasser-Zementwert: 0,545
### 0,28 % Verflüssiger

| Beispiel | Formaldehyd/ Naphthalin (Mol/Mol) | Ausbreitmaß (cm) | Druckfestigkeit (MPa) | | Luftporen (%) |
|---|---|---|---|---|---|
| | | | 18h | 18 Tage | |
| Nullprobe | - | 33,5 | 9,7 | 37,1 | 1,1 |
| 1 | 1,22 | 60 | 10,8 | 37,5 | 1,1 |
| 2 | 1,30 | 59 | 10,5 | 38,1 | 1,0 |
| 3 | 1,50 | 61 | 10,2 | 38,0 | 0,9 |
| 4 | 2,00 | 62 | 10,4 | 39,9 | 0,9 |
| 5 | 2,50 | 59 | 10,5 | 40,0 | 1,0 |
| 6 | 3,00 | 59 | 10,3 | 40,2 | 1,0 |

Beispiele 7 - 10:
Das erfindungsgemäße Zusatzmittell wurde jeweils analog zu Beispiel 1 hergestellt, jedoch mit einem molaren Verhältnis von Formaldehyd zu Naphtalin von 1,50, wobei die in Tabelle 1 angeführten Verfahrensbedingungen eingehalten wurden. Die Herstellung und Prüfung der Betomischung erfolgte analog zu Beispiel 1, jedoch mit dem Unterschied, daß statt PZ 275 ein PZ 375 der Fa. Gmundner Zementwerke H. Hatschek mit 420 kg/m³ Frischbeton eingesetzt, daß die Menge des Zusatzmittels von 0,02 bis 10 Gew.%, bezogen auf den Zementgehalt, variiert und daß unterschiedliche Wasser-Zementwerte (W/Z-Wert) angewendet wurden. Die Ergebnisse der Betonprüfung sind in Tabelle 3 wiedergegeben. Das Ausbreitmaß vor Zugabe des Zusatzmittels betrug bei einem Wasser-Zementwert von 0,475 44 cm.

Tabelle 3: Eigenschaften des Betons
420 kg PZ 375/m$^3$

| Beispiel | W/Z-Wert | Verflüs-siger (%) | Ausbreit-maß (cm) | Druckfestigkeit (MPa) 18 h | 28 Tage | Luftporen (%) |
|----------|----------|-------------------|-------------------|------------|---------|---------------|
| 7 | 0,475 | 0,02 | 49 | 13,5 | 45,6 | unter 0,9 |
| 8 | 0,475 | 0,05 | 54 | 17,5 | 45,9 | unter 0,9 |
| 9 | 0,34 | 5,0 | 60 | 18,2 | 55,1 | 2,0 |
| 10 | 0,34 | 10,0 | 58 | 7,0 | 50.8 | 2,4 |

Beispiel 11:

Um die durch die Verwendung des Zusatzmittels mögliche Wassereinsparung und die sich daraus ergebende erhöhte Festigkeit bei gleichbleibender Fließfähigkeit aufzuzeigen, wurde folgende Betonmischung:

11,06 kg Portlandzement PZ 275 H
7,57 kg Rundkorn 0 - 1 mm
18,26 kg Rundkorn 1 - 4 mm
2,83 kg Rundkorn 4 - 8 mm
15,61 kg Rundkorn 8 - 16 mm
25,07 kg Rundkorn 16 - 32 mm

mit einem Zementgehalt von 300 kg/m$^3$ Festbeton analog zu Beispiel 1, jedoch mit einem Zusatz von 0,8 % des Verflüssigers sowie einem Wasser-Zementwert von 0,436 (130,7 l Wasser/m$^3$ Beton) hergestellt. Analog dazu wurde eine Vergleichsprobe mit gleichem Zementgehalt und annähernd gleicher Festigkeit, jedoch ohne Verflüssiger und mit einem Wasser-Zementwert von 0,533 (160 l Wasser/m$^3$ Beton) hergestellt.

Folgende Materialwerte wurden erhalten:

| | Wasser-Ze-mentwert | Ausbreitmaß (cm) | Druckfestigkeit (MPa) 18 h | 28 Tage |
|--|---------------------|-------------------|------------|---------|
| kein Zusatz | 0,533 | 42,0 | 9,15 | 38,1 |
| 0,8 % Verflüs-siger | 0,436 | 42,5 | 14,40 | 44,5 |

Beispiel 12:

Um die durch die Verwendung des Verflüssigers mögliche Zementeinsparung bei annähernd gleicher Festigkeit und gleicher Fließfähigkeit aufzuzeigen, wurde analog zu Beispiel 1, jedoch mit folgendem Mischungsverhältnis:

11,01 kg Portlandzement PZ 275 H
19,49 kg Rundkorn 0-1 mm
4,34 kg Rundkorn 1 - 4 mm
6,51 kg Rundkorn 4 - 8 mm
11,89 kg Rundkorn 8 - 16 mm
26,85 kg Rundkorn 16 - 32 mm
6,05 kg Wasser,

eine Betonmischung mit einem Zementgehalt von 298 kg/m$^3$ Festbeton, einem Wasser-Zementwert von 0,55 (163,9 l Wasser/m³ Festbeton), mit 0,52 des Verflüssigers und einem Ausbreitmaß von 50 cm hergestellt. Analog dazu wurde eine Vergleichsprobe ohne Verflüssiger hergestellt, bei der zur Erzielung der gleichen Endfestigkeit ein erhöhter Zementwert von 357 kg Zement/m³ Festbeton eingestellt wurde. Zur Erzielung des gleichen Wasser-Zementwertes wurden 196,41 Wasser/m³ Festbeton zugesetzt.

Folgende Materialwerte wurden erhalten:

| | kg Zement/ m³ Beton | Wasser-Ze- mentwert | Ausbreitmaß (cm) | Druckfestigkeit (MPa) 18 h 28 Tage |
|---|---|---|---|---|
| kein Zusatz | 357 | 0,55 | 50 | 9,25   40 |
| 0,52 % Ver- flüssiger | 298 | 0,55 | 50 | 11,65 40 |

Wie aus der Tabelle ersichtlich, wird bei Verwendung des Verflüssigers trotz des geringeren Zementgehaltes eine deutliche Erhöhung der Frühfestigkeit erreicht.

Beispiel 13 - 16:

Um den Einfluß des Kondensationsgrades des Verflüssigers auf die Fließfähigkeit von Zementmörteln aufzuzeigen, wurden Zusatzmittel analog zu Beispiel 1 hergestellt, wobei jedoch ein molares Verhältnis von Formaldehyd zu Naphtalin von 1,50 eingestellt und jeweils bis zu der in Tabelle 4 angegebenen Grenzviskosität kondensiert wurde. Das Ausbreitmaß als Maß für die Fließfähigkeit wurde nach ÖNORM B 3310 (Juni 1980), Punkt 6.6.3.2 und 6.6.3.3 an einem Zementmörtel aus Portlandzement PZ 375 (Gmunden) mit einem W/Z-Wert von 0,50 unter Zugabe von 0,8% Ja des Verflüssigers bestimmt. Die erhaltenen Meßwerte sind ebenfalls in Tabelle 4 wiedergegeben.

Tabelle 4:

| Beispiel | Grenzviskosität (dl/g) | Ausbreitmaß (cm) |
|---|---|---|
| 13 | 0,017 | 16 |
| 14 | 0,034 | 27,5 |
| 15 | 0,104 | 15 |
| 16 | 0,15 | 14 |

Das Ausbreitmaß eines analogen Zementmörtels ohne Verflüssiger betrug 13 cm.

Beispiel 17:

45 Teile synthetischer Anhydrit wurden mit 55 Teilen Zuschlag (Rundkorn 0 - 4 mm) vorgemischt, mit 17 Teilen Wasser, in dem 0,45 Teile Kaliumsulfat und 0,17 Teile des Verflüssigers gemäß Beispiel 1 gelöst waren, versetzt und 90 Sekunden intensiv gemischt, wobei ein Wasser-Anhydritverhältnis von 0,377 eingestellt wurde.

Analog dazu wurde eine Anhydritmischung angesetzt, jedoch ohne Zugabe des Verflüssigers, sowie zur Erreichung der analogen Fließfähigkeit mit einem Wasser-Anhydritverhältnis von 0,601.

Das Ausbreitmaß in cm als Maß für die Fließfähigkeit, sowie die Biegezug-und Druckfestigkeit (4 x 4 x 16 cm Prismen) wurden nach DIN 1164, Blatt 5 und 7 bestimmt.

Folgende Materialwerte wurden erhalten:

| | Wasser/ Anhydrid | Ausbreit- maß (cm) | Druckfestig- keit (MPa) 28 Tage | Biegezugfestig- keit (MPa) 28 Tage |
|---|---|---|---|---|
| kein Zusatz | 0,601 | 20 | 8,97 | 3,22 |
| 0,38 % Ver- flüssiger | 0,377 | 20 | 37,50 | 8,26 |

Beispiel 18:

225 g Portlandzement PZ 275 (Perlmooser Zementwerke, Kirchbichl) mit einem Blaine-Wert von 3200 cm²/g, 225g Microsilica [R](ein Super-Puzzolan der Fa. Blaine-Wert von 3200cm2/g, 225g Microsilica[R](ein Super-Puzzolan der Fa. Elcen mit 85 - 98 $SiO_2$ und einer Oberfläche von 20 m²/g), 450 g Feinsand und 900 g Grobsand (lt. ÖNORM B 3310) wurden trocken vorgemischt, entsprechend einem Wasser-Bindemittelwert (W/B-Wert) von 0,9 mit 405 ml Wasser versetzt und 5 Minuten im Norm-Mörtelmischer gerührt, wobei ein sehr steifer und bröckeliger Zementmörtel erhalten wurde.

Analog dazu wurde ein Zementmörtel mit einem Zusatz von 5,4 g des erfindungsgemäßen Verflüssigers (1,22 % bezogen auf das Bindemittel) hergestellt, der sehr gut homogenisierbar war.

Analog dazu wurde weiters ein Zementmörtel mit einem Zusatz von 5,4 g des Verflüssigers, jedoch mit nur 215 ml Wasser hergestellt, der ebenfalls sehr gut homogenisierbar war.

Folgende Werte, gemessen nach ÖNORM B 3310, zeigen die verbesserte Fließfähigkeit, bzw. bei gleicher Fließfähigkeit die verbesserten Festigkeiten des Baustoffs nach 18 Stunden (4 x 4 x 16 cm Probekörper):

| | W/B-Wert | Ausbreitmaß (cm) | Biegezug- festigkeit | Druck- festigkeit 18 h (MPa) |
|---|---|---|---|---|
| kein Zusatz | 0,9 | 13,1 | 1,1 | 2,9 |
| 1,22 % Verflüssiger | 0,9 | 21,2 | 1,1 | 2,1 |
| 1,22 % Verflüssiger | 0,478 | 13,1 | 2,47 | 8,55 |

Beispiel 19:

Analog zu Beispiel 18 wurden 225 g Portlandzement PZ 375 (Fa. Hatschek, Gmunden), 225 g Steinkohlenflugasche, 450 g Feinsand, 900 g Grobsand und 205 ml Wasser (W/B-Wert: 0,45) im Mörtelmischer homogen verrührt. Eine analoge Mischung wurde unter Zusatz von 1,8 g des erfindungsgemäßen Verflüsssiger (0,4 % bezogen auf das Bindemittel) hergestellt.

Folgende Werte für die verbesserte Fließfähigkeit, sowie für die Biegezug-und Druckfestigkeiten nach 7 Tagen wurden gemessen:

8

EP 0 214 412 B1

|  | W/B-Wert | Ausbreitmaß (cm) | Biegezug-festigkeit 7 Tage (MPa) | Druck-festigkeit 7 Tage (MPa) |
|---|---|---|---|---|
| kein Zusatz | 0,45 | 13,5 | 4,8 | 25,7 |
| 0,4 % Verflüssiger | 0,45 | 18,2 | 4,3 | 23,3 |

Beispiel 20:

Analog zu Beispiel 18 wurden 454 g hydraulischer Kalk (Trassit[R], Steirische Montanwerke), 450 g Feinsand und 900 g Grobsand mit 225 g Wasser W/B-Wert: 0,5) zu einem homogenen Mörtel vermischt. Analog dazu wurde eine Mörtelmischung unter Zusatz von 1,2 % des erfindungsgemäßen Verflüssigers, bezogen auf den Kalk, hergestellt.

Folgende verbesserte Werte für Ausbreitmaß und Festigkeiten nach 7 Tagen (ÖNORM B 3310) wurden gemessen:

|  | W/B-Wert | Ausbreitmaß (cm) | Biegezug-festigkeit 7 Tage (MPa) | Druck-festigkeit 7 Tage (MPa) |
|---|---|---|---|---|
| kein Zusatz | 0,5 | 11,5 | 0,91 | 4,9 |
| 1,2 % Verflüssiger | 0,5 | 19,5 | 1,6 | 6,4 |

**Ansprüche**

1. Verwendung von Salzen von wasserlöslichen NaphthalinsulfonsäureFormaldehydkondensaten, die ein molares Verhältnis von Formaldehyd zu Naphthalinsulfonsäure von 1,2: 1 bis 3 : 1 aufweisen und die bis zu einem Kondensationsgrad kondensiert sind, der einer Grenzviskosität von 0,01 bis 0,15 dl/g entspricht, als Verflüssiger für anorganische Bindemittel zur Erhöhung der Fließfähigkeit der Bindemittel und gegebenenfalls der Festigkeit der daraus hergestellten Bauteile.

2. Verwendung von Salzen von Naphthalinsulfonsäure-Formaldehydkonden-saten gemäß Anspruch 1, dadurch gekennzeichnet, daß ein molares Verhältnis von Formaldehyd zu Naphthalinsulfonsäure von 1,3 : 1 bis 3 1 vorliegt.

3. Verwendung von Salzen von NaphthalinsulfonsäureFormaldehydkondensaten gemäß Anspruch 1 oder 2, dadurch gekennzeichnet, daß sie bis zu einem Kondensationsgrad kondensiert sind, der einer Grenzviskosität von 0,02 bis 0,10 dl/g entspricht.

4. Verwendung von Salzen von Naphthalinsulfonsäure-Formaldehydkonden-saten gemäß einem der Ansprüche 1 bis 3, dadurch gekennzeichnet, daß sie dem anorganischen Bindemittel in einer Menge von 0,01 bis 5 Gew.%, bezogen auf den Bindemittelgehalt, zugesetzt werden.

5. Verwendung von Salzen von Naphthalinsulfonsäure-Formaldehydkonden-saten gemäß Anspruch 4,

9

dadurch gekennzeichnet, daß sie dem anorganischen Bindemittel in einer Menge von 0,2 bis 1,5 Gew.%, bezogen auf den Bindemittelgehalt, zugesetzt werden.

6. Verwendung von Salzen von Naphthalinsulfonsäure-Formaldehydkonden saten gemäß einem der Ansprüche 1 bis 5, dadurch gekennzeichnet, daß diese durch Sulfonierung von Naphthalin mit konzentrierter Schwefelsäure bei einem molaren Verhältnis von Schwefelsäure zu Naphthalin von 0,9 bis 1,1 unter gleichzeitiger Entfernung des entstehenden Wassers durch azeotrope Destillation mit Benzin und anschließende Kondensation der entstandenen Naphtalinsulfonsäure mit Formaldehyd bei einer Temperatur von 110 bis 160° C und einem Druck von 2,5 bis 11 bar hergestellt wurden.

## Claims

1. Use of salts of water-soluble naphthalenesulphonic acid/formaldehyde condensates, which have a molar ratio of formaldehyde to naphthalenesulphonic acid of 1.2:1 to 3:1 and which have been condensed to a degree of condensation which corresponds to an intrinsic viscosity of 0.01 to 0.15 dl/g, as plasticizers for inorganic hinders for increasing the flowability and, if required, the strength of the structural components produced from them.

2. Use of salts of naphthalenesulphonic acid/formaldehyde condensates according to Claim 1, characterized in that the molar ratio of formaldehyde to naphthalenesulphonic acid is 1.3:1 to 3:1.

3. Use of salts of naphthalenesulphonic acid/formaldehyde condensates according to Claim 1 or 2, which have been condensed to a degree of condensation which corresponds to an intrinsic viscosity of 0.02 to 0.10 d1/g.

4. Use of salts of naphthalenesulphonic acid/formaldehyde condensates according to one of Claims 1 to 3, characterized in that the said salts are added to the inorganic binder in an amount of 0.01 to 5% by weight, based on the binder content.

5. Use of salts of naphthalenesulphonic acid/formaldehyde condensates according to Claim 4, characterized in that the said salts are added to the inorganic binder in an amount of 0.2 to 1.5% by weight, based on the binder content.

6. Use of salts of naphthalenesulphonic acid/formaldehyde condensates according to one of Claims 1 to 5, characterized in that the said salts are prepared by sulphonation of naphthalene with concentrated sulphuric acid, using a molar ratio of sulphuric acid to naphthalene of 0.9 to 1.1, with simultaneous removal of the resulting water by azeotropic distillation with gasolene, followed by condensation of the resulting naphthalenesulphonic acid with formaldehyde at a temperature of 110 to 160° C and under a pressure of 2.5 to 11 bar.

## Revendications

1. Utilisation de sels de condensats acide naphtalène sulfonique - formaldéhyde solubles dans l'eau, possédant un rapport molaire de formaldéhyde sur acide naphtalène sulfonique de 1,2:1 à 3:1, condensés à un degré qui définit une viscosité limite de 0,01 à 0,15 dl/g, comme diluant de liant organique pour augmenter la coulabilité du liant et en même temps le durcissement des éléments de construction ensuite fabriqués.

2. Utilisation des sels de condensats acide naphtalène sulfonique - formaldéhyde selon la revendication 1, caractérisée par un rapport molaire de formaldéhyde sur acide naphtalène sulfonique de 1,3:1 à 3:1.

3. Utilisation des sels de condensats acide naphtalène sulfonique - formaldéhyde selon la revendication 1 ou 2, caractérisée en ce qu'ils sont condensés à un degré qui inclut une viscosité limite de 0,02 à 0,10 dl/g.

4. Utilisation des sels de condensats acide naphtalène sulfonique - formaldéhyde selon l'une des revendications 1 à 3, caractérisée en ce qu'ils sont employés selon une quantité de 0,01 à 5 % en masse par rapport au liant organique, calculé sur la quantité de liant.

5. Utilisation des sels de condensats acide naphtalène sulfonique - formaldéhyde selon la revendication 4, caractérisée en ce qu'ils sont employés selon une quantité de 0,2 à 1,5 % en masse par rapport au liant organique, calculé sur la quantité de liant.

6. Utilisation des sels de condensats acide naphtalène sulfonique - formaldéhyde selon l'une des revendications 1 à 5, caractérisée en ce qu'ils sont préparés par sulfonation du naphtalène avec l'acide sulfurique concentré à un rapport molaire acide sulfurique sur naphtalène de 0,9 à 1,1 en éliminant en même temps l'eau formée par distillation azéotropique avec l'essence et ensuite condensation de l'acide naphtalène sulfonique formé avec le formaldéhyde à une température de 110 à 160 $^\circ$C et sous une pression de 2,5 à 11 bar.